# EUROPEAN PATENT SPECIFICATION

(11) **EP 2 390 540 B1**
(45) Date of publication and mention of the grant of the patent: **04.12.2013**
(21) Application number: 10164047.2
(22) Date of filing: 27.05.2010
(51) Int. Cl.: F16K 27/06, F16K 5/04, F16K 11/085

(54) **Valve arrangement and a method of operating the same**
Ventilanordnung und Betriebsverfahren dafür
Agencement de valve et son procédé de fonctionnement

(43) Date of publication of application: 30.11.2011
(73) Proprietor: LK Armatur AB, 254 66 Helsingborg (SE)
(72) Inventor: Carlin, Franco, 38123, Villazzano (TN) (IT); Bencsik, Laszlo, SE-265 38, Åstorp (SE)
(74) Representative: Larsson, Malin

(56) References cited:
- EP-A2- 1 018 614
- WO-A1-2006/116999
- CH-A5- 629 579
- DE-A1-102008 013 111
- GB-A- 920 618

## Description

### Technical field

The present invention generally relates to a valve arrangement, a method of operating a valve arrangement and use of such valve arrangement in a pipe system.

### Background of the invention

Closed systems circulating a liquid fluid is known from e.g. refrigeration systems, heat exchangers and solar energy systems. Such closed systems comprise roughly a long pipe system and a valve arrangement, in which a brine is circulated during use.

Before the closed system can be taken into use, the valve arrangement is connected to a brine supply filling up the system. The valve arrangement should allow the system to be filled with brine and afterwards the brine supply should be allowed to be disconnected without leakage and the valve arrangement to be re-opened to establish a circulating working flow of brine. The opposite procedure should be possible to allow maintainance and subsequent refilling of brine.

In order to prevent circulation of any waste materials, such as deposits or any other unwatend objects, the valve arrangement should normally also contain a filter, which filter should be easy accessible for change and cleaning. The filter is normally arranged as a separate component between two valves.

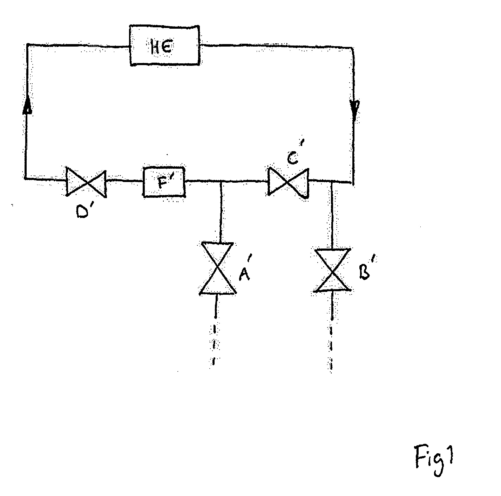

To enhance the understanding, one typical prior art valve arrangement will be described with reference to Figure 1. Starting from the left, the valve arrangement comprises a first valve (D'), a filter housing (F'), a T-joint interconnecting with a second valve (A') having an inlet allowing connection to a brine supply (not disclosed), a third valve (C'), the third valve being connected, via a pipe system containing e.g an heat exchanger (HE), to the first valve (D') and also connected to an outlet having a fourth valve (B') allowing a flow of brine out of the system. During normal use, the second (A') and fourth valves (B') are closed while the first (D') and third valves (C') are open in order to allow a circulating flow of brine.

This known system comprises a large number of components and the majority of them are not used during ordinary use, but only during filling up the system with brine or during maintenance. For example, the first valve (D') is always open with the exception of during maintenance of the system, such as during maintenance of the filter. Further, the second (A'), the third (C') and the fourth valve (B') are only used during filling the system with brine.

The system described above is a typical known valve arrangement and although other systems might be known they have the same overall configuration with a large number of valves and fittings. Such arrangements are not only expensive when it comes to the number of components, but also expensive and time consuming to install and maintain.The known systems are also space requiring since all components must be mutually interconnected by using fittings, each fitting adding to the space required.

Yet another problem with prior art arrangements is the filter removal. The filter is contained in the filter housing, which must be opened by removal of a lid to gain access to the filter. This lid is normally difficult to both remove and to mount due to a pressure built up in the system. Further, the valve arrangement is not always easy accessable since it most often is built-in in cabinets. Therefore, the valve arrangement and its components should be designed to withstand a certain degree of carelessness, in fact sometimes violence, from the craftman. This restricts the choise of material to be used to metal.

The prior art valve arrangements are further hard to fill completely with brine since a small volume of brine tend to be spilled out during maintenance of the filter. This void volume is inevitable filled with an air-pocket which is hard to get rid of unless the valve arrangement is provided with a de-airing component, which further adds to the number of components in the arrangement and thus the complexity and total cost.

Other known valve arrangements are disclosed in CH629579 A5 and EP 1018614 A2.

### Summary of the invention

In view of the above, an object is to provide a new valve arrangement allowing a cost reduction and an easy mounting and maintenance.

Another object is to provide a valve arrangement which is less space requiring.

Yet another object is to provide a valve arrangement that can be supplied and mounted as one single component.

Another object is to allow a valve arrangement wherein at least certain components, such as the lid of the filter housing, can be made in other materials than metal.

Yet another object is to provide a valve arrangement allowing a simple de-airing.

According to one aspect, the invention refers to a valve arrangement, comprising a housing and a first obturator, said housing defining a first cavity, said first cavity having openings forming at least one inlet and at least one outlet, said first obturator being arranged in said first cavity, and operable to control a fluid flow from said at least one inlet to said at least one outlet, and said first obturator defining a valve cavity having openings forming at least one inlet and at least one outlet, wherein a filter is arranged in the valve cavity defined by said first obturator, said filter being arranged to cover at least one of the openings of said first obturator.

The valve arrangement is characterized in that said housing further defines a second cavity arranged in communication with the first cavity, said second cavity having openings in its lateral side wall forming at least one inlet and at least one outlet, said second cavity containing a second obturator having, in its lateral side wall, at least three communicating openings, of which one forming an inlet, and one forming an outlet, wherein said second obturator is operable to control a fluid flow from said at least one inlet opening to said at least one outlet opening arranged in the lateral side wall of the part of the housing defining said second cavity.

The valve arrangement of the present design can be provided as one single unit requiring only two fitting points to be installed in a pipe system.

By the filter being arranged in the valve cavity defined by said obturator, no extra housing for the filter is needed. This reduces the need for at least one housing part, which in turn simplifies the housing or alternatively reduces the need for at least two extra fittings between components. This not only reduces time and cost for installation but also the space requirement.

The filter can be provided as a separate component to be arranged in the valve cavity. No matter design, the filter can be a disposable spare part or adapted to be cleaned and re-inserted.

At least one of said openings in the first cavity forming inlets and/or at least one of said openings in the first cavity forming outlets can be arranged in a lateral side wall of said housing; and at least one of said openings in the valve cavity forming at least one inlet and at least one outlet can be arranged in a lateral side wall of said first obturator. Provided these openings are arranged in axial alignment with each other, a horizontal flow is permitted through the housing via the obturator in the first cavity. In case more than three openings are provided in the lateral side walls, it is to be understood that a branched horizontal flow can be permitted.

At least one of said openings forming at least one inlet and at least one outlet in said first cavity can be arranged in a bottom wall of said housing; and at least one of said openings in the valve cavity can be arranged in a bottom wall of said first obturator. Depending on the number of openings, this permits a T- or L-shaped flow through the housing via the obturator in the first cavity.

This allows the second obturator in cooperation with the second cavity to control the communication between the first and the second cavities in the housing. By operating the second obturator having three openings, this can be set to a working position permitting a communication from the inlet opening in the second cavity, through the second obturator, out of the outlet of the second cavity and further into the inlet of the first cavity. It can also be set to an installation position in which there is no communication permitted between the inlet and outlet openings in the second cavity via said second obturator.

The part of the housing defining said second cavity can have an opening in its bottom wall, and said second obturator can have a fourth opening in its bottom wall communicating with the at least three openings formed in its lateral side wall. This bottom opening can, depending on the intended flow through the valve arrangement, be used as an inlet or as an outlet. By the second cavity and the second obturator having openings in their bottom walls, the part of the housing defining the second cavity is allowed to work as a T-coupling, e.g. combining a vertical flow and a horizontal flow.

The housing can, on its exterior side, comprise fittings adjacent each of said at least one inlet and each of said at least one outlet arranged in the first and second cavities defined in the housing. This allows the valve arrangement to be connected to a pipe system to allow a circulating flow in and out of the valve arrangement in directions determined by the obturators. Such pipe system can off course comprise additional valves in order to control any flow in and out of the valve arrangement via the openings arranged in the first and second valve cavities.

In an arrangement not part of the present invention, said second cavity can be defined in a housing module adapted to be connected to said housing by means of one of said fittings to form a part of said housing. Accordingly, the housing can be divided into several modules to be interconnected via fittings.

In said valve arrangement, at least the first obturator is a plug valve. A plug valve is favorable since it allows easy operation and especially when it comes to operating a flow in different directions such as radially or axially in view of the obturator.

The openings in the lateral side wall of said first obturator can be so positioned in view of the openings arranged in the lateral side wall of the first cavity that the first obturator is operable between
a maintenance position wherein no communication is permitted between the inlet openings and the outlet openings in the lateral side wall of said first cavity, via the openings in the lateral side wall of the first obturator; and
a working position wherein communication is permitted between the inlet openings and the outlet openings in the lateral side wall of said first cavity, via the openings in the lateral side wall of the first obturator.

The mutual relative position between the openings in the lateral side wall of the first obturator and the openings in the first cavity determines a possible flow from the inlet and the outlet openings of the housing.

The openings in the lateral side wall of said second obturator can be so positioned in view of the openings arranged in the lateral side wall of the second cavity that the second obturator is operable between
an installation position wherein no communication is permitted between the inlet openings and the outlet openings in the lateral side wall of said second cavity, via the openings in the lateral side wall of the second obturator; and
a working position wherein communication is permitted, between the inlet openings and the outlet openings in the lateral side wall of said second cavity via the openings in the lateral side wall of the second obturator.

The mutual relative position between the openings in the lateral side wall of the second obturator and the openings in the second cavity determines a possible flow from the inlet and the outlet openings of the housing and especially a possible flow from the second cavity into the first cavity.

Said first cavity can have an access opening adapted to be covered by a lid, said lid being operable between
a working position in which the access opening is closed, and in which the lid is adapted to engage said first obturator and is adapted to set the first obturator to permit communication between the inlet openings and the outlet openings in the lateral side wall of said first cavity, via the openings in the lateral side wall of the first obturator; and
a maintenance position in which the access opening is adapted to be openable, and in which the lid, when operated from the working position to the maintenance position, is adapted to set the first obturator to permit no communication between the inlet openings and the outlet openings in the lateral side wall of said first cavity, via the openings in the lateral side wall of the first obturator.

The lid serves two purposes. It acts as an operating device allowing setting of the first obturator and thereby the communication between the inlet and the outlet openings of the housing. Further, when removed, it allows access to the interior of the first cavity, i.e. the first obturator and the filter contained therein, for maintenance. However, it should be noted that although the lid is set to the maintenance position it is still only openable. The lid has to be actively removed to provide access to the interior of the first cavity. Any such removal is though prevented as long as there is a flow through the first cavity.

Said lid and said first obturator can comprise complementary engagement means, allowing transfer of a rotational movement of the lid to a rotational movement of the first obturator. Accordingly, when operating the lid, its rotation is directly transferred to the first obturator setting the same between the maintenance position and the working position. This means that the lid can never be opened unintentionally while there is still a flow through the valve arrangement.

The filter can be adapted to cooperate with the first obturator, whereby a rotational movement of the first obturator is adapted to result in a corresponding rotational movement of the filter. It is to be understood that the filter can be provided as an insert in the first obturator whereby the filter can be removed and re-inserted via the access opening once the lid has been removed.

The valve arrangement can further comprise
an inlet module to be connected to or integrated with the housing to communicate with the first cavity, said inlet module comprising an obturator and at least one fitting, said obturator being operable between a closed and an open position permitting control of communication between the inlet module and the first cavity; and/or
an outlet module to be connected to or integrated with the housing to communicate with the second cavity, said outlet module comprising an obturator and at least one fitting, said obturator being operable between a closed and an open position permitting control of communication between the outlet module and the second cavity.

The inlet and/or outlet modules can be connected upon need or be provided together with or be integrated parts of the valve arrangement. The inlet and/or outlet modules are preferably connected to the fittings of the housing arranged adjacent its bottom openings. Thereby, said inlet and/outlet modules can be used to control communication through these bottom openings. The inlet module can be used to connect a fluid supply, such as a brine supply, to the valve arrangement in order to fill a pipe system with fluid. The outlet module can be used to control a flow of a fluid out of a pipe system to which the valve arrangement is connected.

The valve arrangement can further comprise an air vent. The air vent can be arranged in any portion where air is likely to be trapped, such as adjacent the lid. The air-vent allows escape of air that is inevitable trapped within the valve cavity when the lid has been removed. By venting the valve cavity while mounting the lid, the mounting is facilitated.

According to another aspect, the invention relates to a method of operating a valve arrangement, said valve arrangement comprising a housing, a first obturator, a filter and a first operating device,
said housing defining a first cavity, said first cavity having in its lateral side wall openings forming an inlet and an outlet, and in one wall portion an access opening;
said first obturator defining a first valve cavity having openings in its lateral side wall forming an inlet and an outlet, and said first obturator being arranged in said first cavity;
said first operating device and said first obturator having cooperating engagement means, and said first operating device being adapted to engage and close said access opening in an openable manner, whereby turning of the first operating device results in turning of said first obturator.

The housing further defines a second cavity, said second cavity having in its lateral side wall openings forming an inlet and an outlet; and
which second cavity receives a second obturator having in its lateral side wall openings forming at least two inlets and at least one outlet,
said second obturator being operable by a second operating device adapted to engage said second obturator via cooperating engagement means, whereby turning of the second operating device results in turning of said second obturator.

The method comprises the steps of operating the first operating device from
a working position, in which the first operating device closes said access opening, and in which working position the inlet and outlet openings of said first obturator are oriented in alignment with the outlet and inlet openings of said first cavity allowing a communication there through; to
a maintenance position in which the first operating device releases its engagement with the access opening, during which turning, the inlet and the outlet openings of said first obturator are oriented out of alignment with the outlet and inlet openings of said first cavity, preventing any communication there through.

Accordingly, the first operating device serves two purposes. Firstly, it closes the access opening or provides, when removed, access to the filter contained within the first valve. Secondly, it operates the first obturator to control communication through the first cavity of the housing in the horizontal direction.

By the cooperating engagement means between the first obturator and the first operating device, the first obturator will always be set to a position closing off any communication through the first cavity before the first operating device can be removed to gain access to the interior of the first cavity. This is a safety aspect.

The method further comprises the steps of operating the second operating device from
a working position, in which one of the two inlets and the outlet in the lateral side wall of the second obturator are oriented in alignment with the outlet and inlet openings of said first and second cavities permitting a communication there through; to
an installation position in which one of the inlet openings of the second obturator is oriented in alignment with the inlet opening of the second cavity and the outlet opening in the lateral side wall of the second obturator is facing a solid surface of the second cavity permitting no communication between the second cavity and the first cavity.

This means that when the second operating device is set to its working position, a communication is permitted through the valve arrangement from an inlet opening in the second cavity, via the second obturator, out of the outlet opening in the second cavity, and towards the inlet opening formed in the first cavity.

### Brief description of the drawings

The above, as well as additional objects, features and advantages of the present invention, will be better understood through the following illustrative and non-limiting detailed description of preferred embodiments of the present invention, with reference to the appended figures, where the same reference numerals will be used for similar elements.
Figure 1 discloses highly schematically a prior art valve arrangement connected to a pipe system.
Figure 2a discloses one embodiment of a basic valve arrangement.
Figure 2b discloses cross section of said basic valve arrangement.
Figure 3 discloses one embodiment of the first obturator.
Figure 4 discloses one embodiment of the filter.
Figure 5a and 5b discloses one embodiment of the lid to be used in the basic valve arrangement. The lid is seen from below and from above.
Figure 6 discloses a tool for operation of the lid.
Figure 7 discloses an exploded view of the valve arrangement according to the invention.
Figure 8 discloses a valve arrangement according to the invention comprising an inlet module and an outlet module connected to a pipe system.

### Detailed description of preferred embodiments

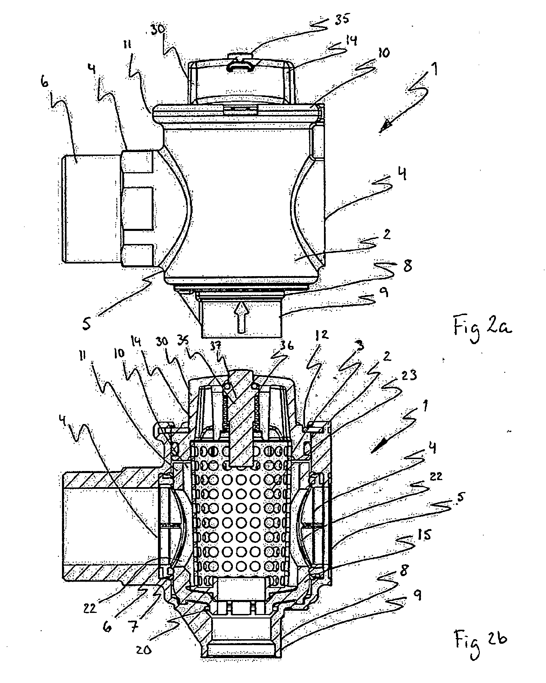

The embodiment from figures 2a and 2b discloses "a basic valve arrangement". The valve arrangement 1 is intended to be connected to a pipe system, not disclosed.

The valve arrangement 1 comprises a housing 2. Although it is understood that other geometries are possible, the disclosed housing has the shape of a longitudinal body with an essentially circular cross section. The housing 2 can by way of example be formed of a casted metal material such as brass or some other alloy. Also plastics can be used. The choice of material should though not be a limiting factor.

The housing 2 defines a first cavity 3 having openings 4 forming at least one inlet and at least one outlet. In the disclosed embodiment one inlet and one outlet are arranged in the lateral side wall 5. The inlet and the outlet are arranged 180 degrees opposed, although it is to be understood that other angles can be used.

The housing 2 comprises fittings 6 (only one shown) on its exterior side adjacent each of said inlets and outlets arranged in the first cavity. The fittings 6 have threaded outer portions 7 allowing fitting of the basic valve arrangement 1 to a pipe system or to additional modules to be described below. It is to be understood that other connecting means than threads are possible.

The housing 2 can, as is disclosed in Figures 2a and 2b, be provided with an opening in the bottom wall of the first cavity 3. This opening 8 can, depending on the intended use, be used as an inlet or an outlet. On the exterior surface of the housing, this opening runs into a fitting 9 having threaded outer portions allowing fitting to another module/pipe system (not shown). If this opening is not to be used, a lid can simply be threaded to close it off.

The first cavity 3 has an access opening 10, in the disclosed embodiment in its upper end portion 11. The upper end portion 11 has on its inner lateral wall area a circumferential groove 12 covered by a circumferential flange 13. The flange 13 has a number of notches (not shown) forming vertical openings to the groove. These notches are adapted to cooperate with protrusions 34 formed in a lid 30 to be described below. These notches and protrusions will be referred to as engagement means.

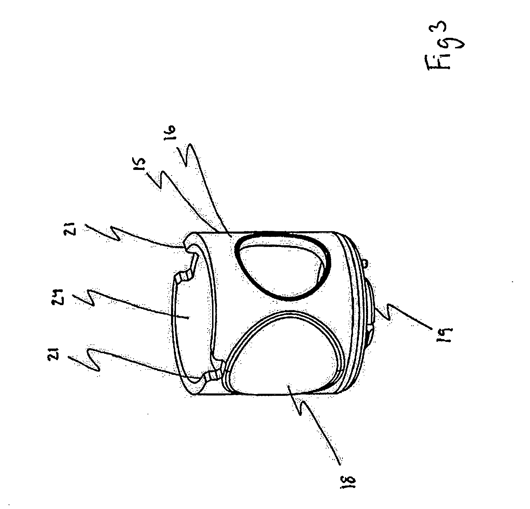

A first obturator 15 is received in the first cavity 3. One embodiment of the first obturator 15 is disclosed in Figure 3. In the disclosed embodiment the obturator 15 is a plug valve having a cup shape defining a valve cavity 24. The obturator 15 can be made by e.g. deep drawn sheet metal or by injection molded plastics. The disclosed obturator 15 has in its lateral side wall 16 area an inlet opening 17 and an outlet opening 18 having a shape corresponding to those of the first cavity 3 in the housing 2. This means that when inserted in the first cavity 3 the openings 4, 17, 18 can be set into alignment.

To allow a communication between the first obturator 15 and the bottom opening 9 in the first cavity 3, the first obturator 15 can have an opening 19 in its bottom portion.

When inserted into the housing 2, the first obturator 15 rests on a circumferential seating 20 in the bottom of the first cavity. This seating 20 serves two purposes, it should provide a sliding surface while operating the first obturator by a turning movement and it should keep the first obturator 15 in position inside the first cavity 3.

In its upper, open end the obturator 15 has notches 21 complementary with protrusions in the lid to be described later on. These notches and protrusions will also be referred to as engagement means.

Sealings 22 are received in the space between inner wall portions of the first cavity 3 and the first obturator 15. The sealings 22 are arranged between the communicating openings in the first cavity 3 of the housing 2 and the first obturator 15 respectively. The sealings 22 disclosed have a flat surface facing the inner wall of the first cavity and a curved surface facing the first obturator. The curved surface is complementary to the curvature of the obturator. Thereby the first obturator 15 can be rotated within the first cavity 3 while establishing a sealing along the peripheral edge portions of said openings. The sealing 22 can e.g. be made of plastics. In one embodiment the sealing is co-moulded using two types of materials with different flexibility to enhance the sealing capacity. It is to be understood that the sealings within the scope of the invention can be designed in a number of ways known to those skilled in the art.

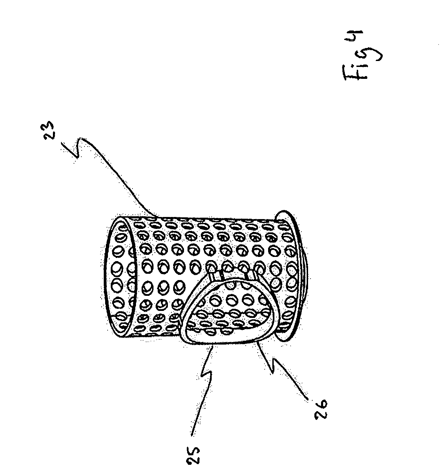

A filter 23 is received in the valve cavity 24 defined by said first obturator 15. One embodiment of the filter 23 is disclosed in Figure 4. The filter 23 can be made by e.g. deep drawn expanded metal or by injection molded plastics. The disclosed filter 23 has a cup shape to be inserted into and received in the first obturator 15. Further, the filter 23 has in its lateral wall area an opening 25 complementary to a relevant opening in the first obturator. By relevant opening is meant the opening most likely to introduce any debris into the filter. Normally this is the opening forming an inlet.

The peripheral outer surface of this opening 25 has a curvature 26 complementary to that of the inner surface of the valve cavity 24 in order to establish a sealing there between.

To allow the filter 23 to be rotated together with the first obturator 15 to follow the same under setting, the disclosed filter has in its lower portion a chamfering (not disclosed) corresponding to a complementary chamfering (not disclosed) in the bottom of the first obturator. The chamfering further ensures that the filter will be correctly mounted into the first obturator with its inlet opening always facing the inlet opening of the obturator as the valve is operated.

It is to be understood that other embodiments can be used as long as the filter covers relevant openings.

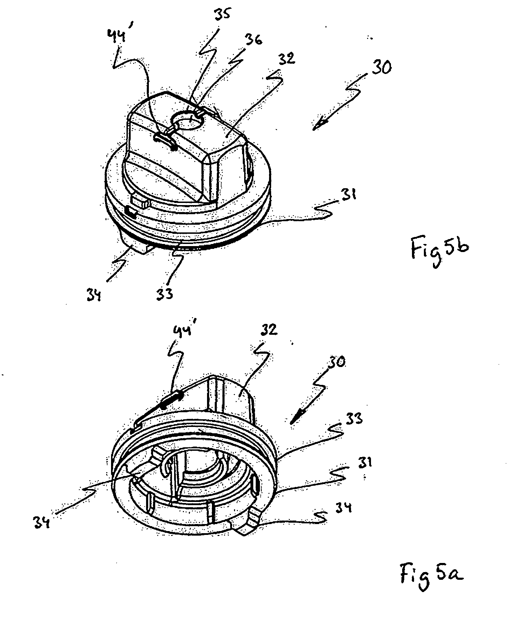

With reference to Figures 2a, 2b, 5a and 5b, the basic valve arrangement 1 further comprises a lid 30 adapted to cover and seal the access opening 10. The lid 30 can in its simplest form (not shown) be adapted to have a threaded engagement with the access opening. However, other alternatives are possible.

In one embodiment the lid 30 is adapted to engage the access opening by a bayonet coupling to be explained in the following.

The lid 30 has a lower longitudinal covering portion 31 to be inserted into the upper portion 11 of the access opening 10. In its opposite upper portion the lid 30 has an operating portion 32 that can be gripped by hand or by a tool. The longitudinal covering portion 31 has on its outer circumferential wall a groove adapted to receive a sealing such as an O-ring adapted to seal against the inner lateral wall area of the access opening.

In the bottom end, the lid 30 has vertical protrusions 34 adapted to engage the complementary notches 21 in the obturator 15 in order for the latter to be rotated while turning the lid. As given above, these protrusion and notches 21, 34 form engagement means. This means that the lid is not only a lid but also an operating device operating the first obturator between its working position (permitting a communication through the obturator) and its maintenance position (no communication permitted) .

Further, the lid 30 can on its covering portion 31 have horizontal protrusions (not shown) adapted to cooperate with the notches and the circumferential groove formed in the upper end portion of the access opening. Also these form engagement means.

When inserted into the access opening 10, the horizontal protrusions of the lid are fitted to engage the protrusions of the housing. Then the lid is pressed in the vertical direction and turned, whereby the horizontal protrusions of the lid will engage the circumferential groove of the access opening and thereby lock in the vertical direction.

To ensure that the lid is correctly oriented in view of the first obturator in order to engage the same, the horizontal protrusions of the lid and the vertical notches of the access opening are preferably distributed in the circumferential direction so that only one mutual position between the parts is possible.

To facilitate mounting of the lid 30 to the access opening 10, the overpressure created within the valve arrangement 1 should be allowed to escape. To allow such venting, the lid can comprise an air vent 35.

In one embodiment, see Figures 2a, 2b, 5a and 5b, the air vent comprises a through hole 36 receiving a piston 37. The piston 37 acting as a ball valve is pre-tensioned towards a closed position sealing the through hole. When pressing the piston downwards towards the lid 30, an opening is formed allowing air trapped in the valve arrangement to be released.

The lid 30 can be formed of a plastics material allowing a cheaper manufacturing cost and a more complex shape with a number of functions to be integrated.

It is to be understood that the air vent can be arranged in other positions than in the lid. By way of example it can be arranged in the lateral side wall of the first cavity close to its upper end, i.e. in a position where an air pocket is likely to be trapped.

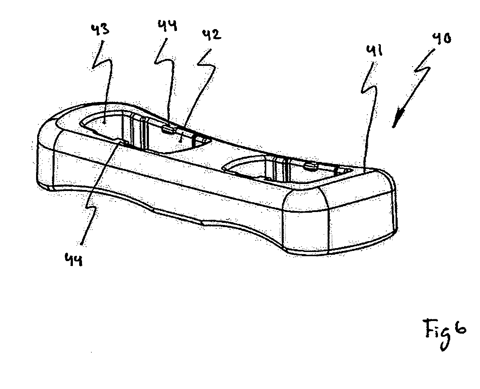

Still, in order to even more enhance use, the valve arrangement can be provided with a tool 40, see Figure 6. The tool 40 acting as a lever has a handle portion 41 and an engagement portion 42. The engagement portion 42 comprises a cavity 43 to be arranged over and fit the operating portion 32 of the lid 30.

In this position the lid 30 can easily be turned to its working position in which the lid is locked by the horizontal protrusions of the lid engaging and locking with the groove of the housing, or a maintenance position in which the lid is openable. In the maintenance position the horizontal protrusions of the lid are coinciding with the vertical notches of the access opening.

To further facilitate opening of the lid, the tool can also be used as a lever in order to prize the lid from the housing. To allow this, the engagement portion 42 has shoulders 44 cooperating with shoulders 44' of the operating portion of the lid. When the lid 30 is turned to the maintenance position by means of the tool, the lid can be prized by the front end of the tool prizing against the housing while the shoulders cooperating.

By the tool, the valve arrangement can be operated with a minimum of hand force. Thus, there is no need to use additional tools such as pipe tongues , wrenches or the like. When not used, the tool can be stored connected to the lid.

The basic valve arrangement 1 disclosed above is useful in a pipe system requiring a filter. Whenever it is time for filter cleaning, the lid 30 is opened by using hand power only turning the lid or by using the tool 40. By turning the lid 30 to its maintenance position, the first obturator 15 will automatically be turned so that the inlet/outlet openings 17, 18 in the lateral side wall 16 of the first obturator 15 will be moved out of alignment with the corresponding openings 4 in the housing 2, permitting no communication through the housing in that direction. When removing the lid 30, there is free access to the filter 23 which can simply be removed, cleaned and then re-inserted.

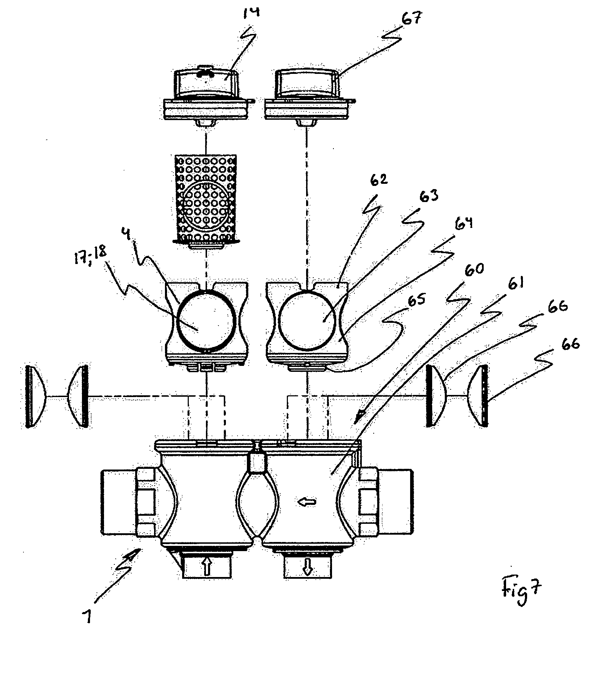

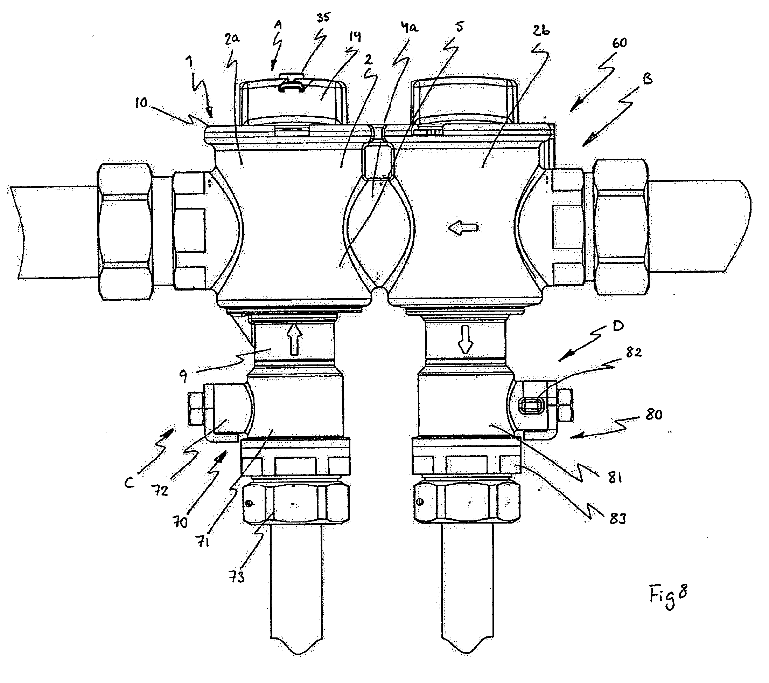

The basic valve arrangement described above can depending on its intended use be provided with further modules described and exemplified below with reference to Figure 8. The valve arrangement according to the invention and disclosed in Figure 7 comprises, in addition to the basic valve arrangement, a valve module 60. Further, the valve arrangement disclosed in Figure 8 comprises, in addition to the valve arrangement according to the invention, an inlet module 70 and an outlet module 80. The further modules 70, 80 can be integrated with the housing of the valve arrangement and/or fitted to its housing and its connections.

The valve module 60 is integrated with the housing 2 next to the inlet 4a formed in the lateral side wall 5. This means that the housing part 2b of the valve module 60 is casted in one piece with the housing part 2a of the basic valve arrangement 1. It is however to be understood that the same effect can be achieved by simply fitting the housing of the valve module with the housing of the basic valve arrangement, such an arrangement not being part of the present invention.

The housing part 2b of the valve module 60 has essentially the same design, though mirror inverted, as the housing 2 of the basic valve arrangement whereby reference is made to the previous description.

The valve module housing part 2b defines a cavity, a second cavity 61, adapted to receive a second obturator 62 having essentially the same design as that of the basic valve arrangement described above. The difference is that the second obturator 62 has three openings 63 (only one shown) in its lateral side wall 64: one inlet opening and two outlet openings. The longitudinal central axis of these openings are crossing each other at an angle of 90 degrees.

Like in the first obturator 15 there is an opening 65 in the bottom wall. Further, sealings 66 of the same type as in the basic vale arrangement 1 are arranged between the inlet openings and the outlet openings of the second cavity 61 and the second obturator 62, respectively.

The second obturator 62 is cooperating with an operating means 67 having generally the same design as the lid 14 arranged in the basic valve arrangement 1 with the exception that the operating means cannot be removed. By turning the operating means 67, by hand or by using the tool 40, the second obturator 62 can be turned 90 degrees in order to set its openings 63 in communication and to permit or not permit communication with the openings 4, 17, 18 in the basic valve arrangement 1.

Referring to the embodiment of Figure 8 comprising in addition an inlet module 70 and an outlet module 80, the inlet module can comprise a housing 71 defining an interior cavity with an axial through bore (not shown). This cavity houses a valve 72 by which any communication through the bore can be operated. In its simplest form the valve is a ball valve operated from the outside of the housing by means of a bolt. The inlet module 70 has in its lower end a threaded fitting 73. This can by way of example be used to connect a brine supply (not disclosed). When not in use, the threaded fitting can be closed by a lid. The inlet module is adapted to be connected to the fitting 9 arranged in the bottom wall of the housing 2 of the basic valve arrangement 1.

The outlet module 80 can comprise a housing 81 defining an interior cavity with an axial through bore. This cavity houses a valve 82 by which any communication through the bore can be operated. In its simplest form the valve is a ball valve operated from the outside of the housing by means of a bolt. The outlet module has in its lower end a threaded fitting 83 allowing connection of e.g. a tube for guiding flow of brine out of the pipe system when the latter should be drained. When not in use, the threaded fitting can be closed by a lid. The outlet module is adapted to be connected to the fitting arranged in the bottom wall of the housing 2b of the valve module 60.

It is to be understood that the inlet module 70 and the outlet module 80 can have a number of different designs as long as a communication into and out of the valve arrangement can be controlled.

In the following, the function of a valve arrangement according to Figure 8 will be described. The valve arrangement is schematically connected to a closed pipe system containing e.g. a heat exchanger. The closed pipe system is intended to contain a liquid fluid such as a brine. In order to facilitate the description, the different valves are identified as follows: Valve in basic arrangement: A, valve in the valve module: B, valve in the inlet module: C, valve in the outlet module: D.

### Filling with brine

In order to fill the pipe system with brine, a brine supply is connected to the inlet module 70. Valves C, D and A are opened. Valve B is set to a position wherein a through flow towards valve A is prevented but instead a flow towards valve D is permitted. In this position, a flow of brine is permitted through the pipe system from the inlet module 70, via a heat exchanger (not shown) and out through the outlet module 80. To make sure that no air is trapped in the system, the air vent 35 in the lid 14 can be pressed for de-airing.

Once the pipe system is filled with brine, valves C and D are closed and valve B is set to a position wherein a flow towards valve D is prevented but instead a flow towards valve A is allowed. The brine supply can now be disconnected and the system is ready to be operated, preferably after a de-airing.

### Maintenance of filter

The filter 23 contained in the valve arrangement 1 should be cleaned frequently. To allow removal of the filter, the operator only has to operate one valve and that is valve A. Valve A is operated by turning the lid 14 forming an operating means to its maintenance position. Since the lid 14 cooperates with the first obturator 15, the valve A will be closed, preventing a flow from both directions into that part of the housing. After full removal of the lid 14, free access is gained to the filter which can be removed, cleaned and re-inserted.

Before replacing the lid 14, the first cavity 3 can be filled with brine to replace the small volume that inevitable is lost during handling of the filter.

When replacing the lid 14, the lid is put back in place and pushed towards the access opening 10 in the housing, while at the same time the air vent is pressed down to de-air any the system. The de-airing releases overpressure that otherwise makes it hard or even impossible to mount the lid manually. After this, the lid can easily be turned to its locked, working position. During this operation, the lid will automatically engage and set the first obturator 15 in valve A to an open position, meaning that the system is ready for use, preferably after new de-airing.

The valve arrangement can during use be protected by an insulating casing, which casing can also be used as a delivery protection.

To sum up, the present invention allows the complex and expensive prior art arrangements containing a number of separate components of valves and fittings to be reduced to one unit requiring only two fitting points to be installed in a pipe system. This allows less work to a reduced cost during installation. Further, the valve arrangement is less space requiring than prior art systems, which means that smaller cabinets can be used.

The valve arrangement further provides an easy operation since only one valve must be operated in order to allow maintenance of the filter. Also, the same operation that closes the flow also releases the filter and provides access to the same.

Further, as a safety aspect, since the lid operates the valve which determines the communication past the access opening, the lid can never be opened while there is a flow in the system.

The description above relates to a number of embodiments. It should though be understood that modifications thereto are possible, whereby the scope of protection should be determined by that of the claims.

For example, the valve arrangement can comprise additional valve modules in order to fit the arrangement with additional pipe systems. Also, the disclosed obturators and the corresponding cavities in the housing receiving the same can comprise additional inlet and outlet openings in order to allow interconnection of the valve arrangement with additional pipe systems. This especially applies to the first obturator receiving the filter.

## Claims

1. Valve arrangement (1), comprising a housing (2) and a first obturator (15),
said housing (2) defining a first cavity (3), said first cavity (3) having openings (4) forming at least one inlet and at least one outlet,
said first obturator (15) being arranged in said first cavity (3), and operable to control a fluid flow from said at least one inlet to said at least one outlet, and said first obturator (15) defining a valve cavity (24) having openings forming at least one inlet (17) and at least one outlet (18),
wherein a filter (23) is arranged in the valve cavity (24) defined by said first obturator (15), said filter (23) being arranged to cover at least one of the openings (17, 18) of said first obturator (15), **characterized in that**
said housing (2) further defines a second cavity (61) arranged in communication with the first cavity (3), said second cavity (61) having openings in its lateral side wall forming at least one inlet and at least one outlet, and
said second cavity (61) containing a second obturator (62) having, in its lateral side wall (64), at least three communicating openings (63), of which one forming an inlet, and one forming an outlet,
wherein said second obturator (62) is operable to control a fluid flow from said at least one inlet opening to said at least one outlet opening arranged in the lateral side wall of the part of the housing defining said second cavity (61).

2. Valve arrangement (1) according to claim 1, wherein
at least one of said openings in the first cavity (3) forming inlets and/or at least one of said openings in the first cavity (3) forming outlets are arranged in a lateral side wall (5) of said housing (2); and wherein
at least one of said openings in the valve cavity (24) forming at least one inlet and at least one outlet are arranged in a lateral side wall (16) of said first obturator (15).

3. Valve arrangement (1) according to claim 1 or 2, wherein
at least one of said openings forming at least one inlet and at least one outlet in said first cavity (3) is arranged in a bottom wall of said housing (2);
wherein
at least one (19) of said openings in the valve cavity (24) are arranged in a bottom wall of said first obturator (15).

4. Valve arrangement (1) according to any of the preceding claims,
wherein the part of the housing (2) defining said second cavity (61), in its bottom wall has an opening, and wherein
said second obturator (62) has a fourth opening (65) in its bottom wall communicating with the at least three openings (63) formed in its lateral side wall.

5. Valve arrangement (1) according to any of the preceding claims,
wherein the housing (2) on its exterior side comprises fittings (6) adjacent each of said at least one inlet and each of said at least one outlet arranged in the first and second cavities (3, 61) defined in the housing (2).

6. Valve arrangement (1) according to claim 2, wherein
the openings in the lateral side wall (16) of said first obturator (15) are so positioned in view of the openings (4) arranged in the lateral side wall of the first cavity (3) that the first obturator (15) is operable between
a maintenance position wherein no communication is permitted between the inlet openings (4) and the outlet openings (4) in the lateral side wall (5) of said first cavity (3), via the openings in the lateral side wall of the first obturator (15); and
a working position wherein communication is permitted between the inlet openings (4) and the outlet openings (4) in the lateral side wall (5) of said first cavity (3), via the openings in the lateral side wall (16) of the first obturator (15).

7. Valve arrangement (1) according to claim 1, wherein
the openings (63) in the lateral side wall (64) of said second obturator (62) are so positioned in view of the openings arranged in the lateral side wall of the second cavity (61) that the second obturator (62) is operable between
an installation position wherein no communication is permitted between the inlet openings and the outlet openings in the lateral side wall of said second cavity (61), via the openings (63) in the lateral side wall (64) of the second obturator (62); and
a working position wherein communication is permitted, between the inlet openings and the outlet openings in the lateral side wall of said second cavity (61) via the openings (63) in the lateral side wall (64) of the second obturator (62).

8. Valve arrangement (1) according to claim 1, wherein said first cavity (3) has an access opening (10) adapted to be covered by a lid (30),
said lid (30) being operable between
a working position in which the access opening (10) is closed, and in which the lid (30) is adapted to engage said first obturator (15) and adapted to set the first obturator (15) to permit communication between the inlet openings and the outlet openings in the lateral side wall of said first cavity (3), via the openings (17, 18) in the lateral side wall (16) of the first obturator (15); and
a maintenance position in which the access opening (10) is adapted to be openable, and in which the lid (30), when operated from the working position to the maintenance position, is adapted to set the first obturator (15) to permit no communication between the inlet openings and the outlet openings in the lateral side wall of said first cavity (3), via the openings (17, 18) in the lateral side wall (16) of the first obturator (15).

9. Valve arrangement (1) according to claim 8, wherein said lid (30) and said first obturator (15) comprise complementary engagement means (21, 34), allowing transfer of a rotational movement of the lid (30) to a rotational movement of the first obturator (15).

10. Valve arrangement (1) according to any of the preceding claims, wherein said filter (23) is adapted to cooperate with the first obturator (15), whereby a rotational movement of the first obturator (15) is adapted to result in a corresponding rotational movement of the filter (23).

11. Valve arrangement (1) according to any of the preceding claims, further comprising
an inlet module (70) to be connected to or integrated with the housing (2) to communicate with the first cavity (3), said inlet module (70) comprising a valve (72) and at least one fitting (73), said valve (72) being operable between a closed and an open position permitting control of communication between the inlet module (70) and the first cavity (3); and/or
an outlet module (80) to be connected to or integrated with the housing (2) to communicate with the second cavity (61), said outlet module (80) comprising a valve (82) and at least one fitting (83), said valve (82) being operable between a closed and an open position permitting control of communication between the outlet module (80) and the second cavity (61).

12. Valve arrangement (1) according to any of the preceding claims, further comprising an air vent (35).

13. Method of operating a valve arrangement(1), said valve arrangement (1) comprising a housing (2), a first obturator (15), a filter (23) and a first operating device (30),
said housing (2) defining a first cavity (3), said first cavity (3) having in its lateral side wall openings forming an inlet and an outlet, and in one wall portion an access opening (10);
said first obturator (15) defining a first valve cavity (24) having openings in its lateral side wall forming an inlet (17) and an outlet (18), and said first obturator (15) being arranged in said first cavity (3);
said first operating device (30) and said first obturator (15) having cooperating engagement means (21, 34), and said first operating device (30) being adapted to engage and close said access opening (10) in an openable manner, whereby turning of the first operating device (30) results in turning of said first obturator (15),
said housing (2) further defines a second cavity (61), said second cavity (61) having in its lateral side wall (64) openings (63) forming an inlet and an outlet; and
which second cavity (61) receives a second obturator (62) having in its lateral side wall openings (64) forming at least two inlets and at least one outlet,
said second obturator (62) being operable by a second operating device (67) adapted to engage said second obturator (62) via cooperating engagement means, whereby turning of the second operating device (67) results in turning of said second obturator (62),
comprising the steps of operating the first operating device (30) from
a working position, in which the first operating device (30) closes said access opening (10), and in which working position the inlet and outlet openings of said first obturator (15) are oriented in alignment with the outlet and inlet openings of said first cavity (3) allowing a communication there through; to
a maintenance position in which the first operating device (30) releases its engagement with the access opening (10), during which turning, the inlet and the outlet openings of said first obturator (15) are oriented out of alignment with the outlet and inlet openings of said first cavity (3), preventing any communication there through,
and comprising the steps of operating the second operating device (67) from
a working position, in which one of the two inlets and the outlet (63) in the lateral side wall (64) of the second obturator (62) are oriented in alignment with the outlet and inlet openings of said first and second cavities permitting a communication there through; to
an installation position in which one of the inlet openings of the second obturator (62) is oriented in alignment with the inlet opening of the second cavity (61) and the outlet opening in the lateral side wall of the second obturator (62) is facing a solid surface of the second cavity (61) permitting no communication between the second cavity (61) and the first cavity (3).

## Patentansprüche

1. Ventilanordnung (1), umfassend ein Gehäuse (2) und ein erstes Absperrorgan (15),
wobei das Gehäuse (2) einen ersten Hohlraum (3) definiert, wobei der erste Hohlraum (3) Öffnungen (4) aufweist, die zumindest einen Einlass und zumindest einen Auslass ausbilden,
wobei das erste Absperrorgan (15) in dem ersten Hohlraum (3) angeordnet ist und zum Regeln eines Fluidstroms von dem zumindest einen Einlass zu dem zumindest einen Auslass betriebsfähig ist, und wobei das erste Absperrorgan (15) einen Ventilhohlraum (24) definiert, der Öffnungen aufweist, welche zumindest einen Einlass (17) und zumindest einen Auslass (18) ausbilden,
wobei ein Filter (23) in dem Ventilhohlraum (24) angeordnet ist, der durch das erste Absperrorgan (15) definiert ist, wobei das Filter (23) zum Abdecken von zumindest einer der Öffnungen (17, 18) des ersten Absperrorgans (15) angeordnet ist, **dadurch gekennzeichnet, dass** das Gehäuse (2) ferner einen zweiten Hohlraum (61) definiert, der in Verbindung mit dem ersten Hohlraum (3) angeordnet ist, wobei der zweite Hohlraum (61) Öffnungen in seiner lateralen Seitenwand aufweist, die zumindest einen Einlass und zumindest einen Auslass ausbilden, und
der zweite Hohlraum (61) ein zweites Absperrorgan (62) enthält, das in seiner lateralen Seitenwand (64) zumindest drei miteinander verbundene Öffnungen (63) aufweist, von denen eine einen Einlass und eine einen Auslass ausbilden,
wobei das zweite Absperrorgan (62) zum Regeln eines Fluidstroms von der zumindest einen Einlassöffnung zu der zumindest einen Auslassöffnung betriebsfähig ist, die in der lateralen Seitenwand des Teils des Gehäuses angeordnet sind, welches den zweiten Hohlraum (61) definiert.

2. Ventilanordnung (1) nach Anspruch 1, wobei
zumindest eine der Öffnungen in dem ersten Hohlraum (3), die Einlässe ausbilden, und/oder zumindest eine der Öffnungen in dem ersten Hohlraum (3), die Auslässe ausbilden, in einer lateralen Seitenwand (5) des Gehäuses (2) angeordnet sind; und wobei zumindest eine der Öffnungen in dem Ventilhohlraum (24), die zumindest einen Einlass und zumindest einen Auslass ausbilden, in einer lateralen Seitenwand (16) des ersten Absperrorgans (15) angeordnet sind.

3. Ventilanordnung (1) nach einem der Ansprüche 1 oder 2, wobei
zumindest eine der Öffnungen, die zumindest einen Einlass und zumindest einen Auslass in dem ersten Hohlraum (3) ausbilden, in einer unteren Wand des Gehäuses (2) angeordnet ist; wobei zumindest eine (19) der Öffnungen in dem Ventilhohlraum (24) in einer unteren Wand des ersten Absperrorgans (15) angeordnet ist.

4. Ventilanordnung (1) nach einem der vorhergehenden Ansprüche,
wobei das Teil des Gehäuses (2), das den zweiten Hohlraum (61) definiert, in seiner unteren Wand eine Öffnung aufweist, und wobei das zweite Absperrorgan (62) eine vierte Öffnung (65) in seiner unteren Wand aufweist, die mit den zumindest drei Öffnungen (63) in Verbindung steht, welche in seiner lateralen Seitenwand ausgebildet sind.

5. Ventilanordnung (1) nach einem der vorhergehenden Ansprüche, wobei das Gehäuse (2) auf seiner Außenseite Anschlussstücke (6) benachbart zu jedem des zumindest einen Einlasses und jedem des zumindest einen Auslasses umfasst, die in dem ersten und zweiten Hohlraum (3, 61) angeordnet sind, welche in dem Gehäuse (2) definiert sind.

6. Ventilanordnung (1) nach Anspruch 2, wobei
die Öffnungen in der lateralen Seitenwand (16) des ersten Absperrorgans (15) hinsichtlich der Öffnungen (4), die in der lateralen Seitenwand des ersten Hohlraums (3) angeordnet sind, derart angeordnet sind, dass das erste Absperrorgan (15) zwischen einer Wartungsposition, in der keine Verbindung zwischen den Einlassöffnungen (4) und den Auslassöffnungen (4) in der lateralen Seitenwand (5) des ersten Hohlraums (3) über die Öffnungen in der lateralen Seitenwand des ersten Absperrorgans (15) gestattet ist, und einer Arbeitsposition, in der Verbindung zwischen den Einlassöffnungen (4) und den Auslassöffnungen (4) in der lateralen Seitenwand (5) des ersten Hohlraums (3) über die Öffnungen in der lateralen Seitenwand (16) des ersten Absperrorgans (15) gestattet ist,
betriebsfähig ist.

7. Ventilanordnung (1) nach Anspruch 1, wobei die Öffnungen (63) in der lateralen Seitenwand (64) des zweiten Absperrorgans (62) hinsichtlich der Öffnungen, die in der lateralen Seitenwand des zweiten Hohlraums (61) angeordnet sind, derart angeordnet sind, dass das zweite Absperrorgan (62) zwischen einer Einrichtungsposition, in der keine Verbindung zwischen den Einlassöffnungen und den Auslassöffnungen in der lateralen Seitenwand des zweiten Hohlraums (61) über die Öffnungen (63) in der lateralen Seitenwand (64) des zweiten Absperrorgans (62) gestattet ist, und
einer Arbeitsposition, in der Verbindung zwischen den Einlassöffnungen und den Auslassöffnungen in der lateralen Seitenwand des zweiten Hohlraums (61) über die Öffnungen (63) in der lateralen Seitenwand (64) des zweiten Absperrorgans (62) gestattet ist,
betriebsfähig ist.

8. Ventilanordnung (1) nach Anspruch 1, wobei der erste Hohlraum (3) eine Zugangsöffnung (10) aufweist, die dazu geeignet ist, durch einen Deckel (30) abgedeckt zu sein,
wobei der Deckel (30) zwischen
einer Arbeitsposition, in der die Zugangsöffnung (10) geschlossen ist, und in der der Deckel (30) dazu geeignet ist, das erste Absperrorgan (15) in Eingriff zu nehmen, und dazu geeignet ist, das erste Absperrorgan (15) zum Zulassen von Verbindung zwischen den Einlassöffnungen und den Auslassöffnungen in der lateralen Seitenwand des ersten Hohlraums (3) über die Öffnungen (17, 18) in der lateralen Seitenwand (16) des ersten Absperrorgans (15) einzustellen, und
einer Wartungsposition, in der die Zugangsöffnung (10) zum Öffnen geeignet ist, und in der der Deckel (30), wenn er von der Arbeitsposition in die Wartungsposition betrieben wird, dazu geeignet ist, das erste Absperrorgan (15) zum Zulassen keiner Verbindung zwischen den Einlassöffnungen und den Auslassöffnungen in der lateralen Seitenwand des ersten Hohlraums (3) über die Öffnungen (17, 18) in der lateralen Seitenwand (16) des ersten Absperrorgans (15) einzustellen,
betriebsfähig ist.

9. Ventilanordnung (1) nach Anspruch 8, wobei der Deckel (30) und das erste Absperrorgan (15) komplementäre Eingriffsmittel (21, 34) umfassen, die die Überführung einer Drehbewegung des Deckels (30) zu einer Drehbewegung des ersten Absperrorgans (15) ermöglichen.

10. Ventilanordnung (1) nach einem der vorhergehenden Ansprüche, wobei das Filter (23) zum Zusammenwirken mit dem ersten Absperrorgan (15) geeignet ist, wodurch eine Drehbewegung des ersten Absperrorgans (15) zu einer entsprechenden Drehbewegung des Filters (23) führen kann.

11. Ventilanordnung (1) nach einem der vorhergehenden Ansprüche, ferner umfassend
ein Einlassmodul (70) zum Verbinden mit dem oder Eingliedern in das Gehäuse (2) zur Verbindung mit dem ersten Hohlraum (3), wobei das Einlassmodul (70) ein Ventil (72) und zumindest ein Anschlussstück (73) umfasst, wobei das Ventil (72) zwischen einer geschlossenen und einer offen Position betriebsfähig ist, die Verbindungsregelung zwischen dem Einlassmodul (70) und dem ersten Hohlraum (3) gestattet; und/oder
ein Auslassmodul (80) zum Verbinden mit dem oder Eingliedern in das Gehäuse (2) zur Verbindung mit dem zweiten Hohlraum (61), wobei das Auslassmodul (80) ein Ventil (82) und zumindest ein Anschlussstück (83) umfasst, wobei das Ventil (82) zwischen einer geschlossenen und einer offen Position betriebsfähig ist, die Verbindungsregelung zwischen dem Auslassmodul (80) und dem zweiten Hohlraum (61) gestattet.

12. Ventilanordnung (1) nach einem der vorhergehenden Ansprüche, ferner umfassend einen Entlüftungskanal (35).

13. Verfahren zum Betreiben einer Ventilanordnung (1), die Ventilanordnung (1) umfassend ein Gehäuse (2), ein erstes Absperrorgan (15), ein Filter (23) und ein erstes Betriebsgerät (30),
wobei das Gehäuse (2) einen ersten Hohlraum (3) definiert, wobei der erste Hohlraum (3) in seiner lateralen Seitenwand Öffnungen, die einen Einlass und einen Auslass ausbilden, und in einem Wandabschnitt eine Zugangsöffnung (10) aufweist;
wobei das erste Absperrorgan (15) einen ersten Ventilhohlraum (24) mit Öffnungen in seiner lateralen Seitenwand, die einen Einlass (17) und einen Auslass (18) ausbilden, definiert, und das erste Absperrorgan (15) in dem ersten Hohlraum (3) angeordnet ist;
wobei das erste Betriebsgerät (30) und das erste Absperrorgan (15) zusammenwirkende Eingriffsmittel (21, 34) aufweisen und das erste Betriebsgerät (30) dazu geeignet ist, die Zugangsöffnung (10) betriebsfähig in Eingriff zu nehmen und zu schließen, wobei Drehen des ersten Betriebsgeräts (30) zum Drehen des ersten Absperrorgans (15) führt,
wobei das Gehäuse (2) ferner einen zweiten Hohlraum (61) definiert, wobei der zweite Hohlraum (61) in seiner lateralen Seitenwand (64) Öffnungen (63) aufweist, die einen Einlass und einen Auslass ausbilden; und
wobei der zweite Hohlraum (61) ein zweites Absperrorgan (62) aufnimmt, das in seiner lateralen Seitenwand (64) Öffnungen (63) aufweist, die zumindest zwei Einlässe und zumindest einen Auslass ausbilden,
wobei das zweite Absperrorgan (62) durch ein zweites Betriebsgerät (67) betriebsfähig ist, das dazu geeignet ist, das zweite Absperrorgan (62) über zusammenwirkende Eingriffsmittel in Eingriff zu nehmen, wobei Drehen des zweiten Betriebsgeräts (67) zum Drehen des zweiten Absperrorgans (62) führt,
umfassend die Schritte des Betreibens des ersten Betriebsgeräts (30) aus
einer Arbeitsposition, in der das erste Betriebsgerät (30) die Zugangsöffnung (10) schließt, und wobei in der Arbeitsposition die Einlass- und Auslassöffnungen des ersten Absperrorgans (15) an den Auslass- und Einlassöffnungen des ersten Hohlraums (3) ausgerichtet sind, wodurch eine Verbindung dort hindurch gestattet ist, in
eine Wartungsposition, in der das erste Betriebsgerät (30) seine Ineingriffnahme der Zugangsöffnung (10) löst, wobei während des Drehens die Einlass- und Auslassöffnungen des ersten Absperrorgans (15) außer Ausrichtung mit den Auslass- und Einlassöffnungen des ersten Hohlraums (3) ausgerichtet werden, wodurch jegliche Verbindung dort hindurch verhindert ist,
und umfassend die Schritte des Betreibens des zweiten Betriebsgeräts (67) aus
einer Arbeitsposition, in der einer der zwei Einlässe und der Auslass (63) in der lateralen Seitenwand (64) des zweiten Absperrorgans (62) in Ausrichtung an den Auslass- und Einlassöffnungen des ersten und zweiten Hohlraums ausgerichtet sind, wodurch eine Verbindung dort hindurch gestattet ist, in
eine Einrichtungsposition, in der eine der Einlassöffnungen des zweiten Absperrorgans (62) in Ausrichtung mit der Einlassöffnung des zweiten Hohlraums (61) ausgerichtet ist und die Auslassöffnung in der lateralen Seitenwand des zweiten Absperrorgans (62) einer festen Oberfläche des zweiten Hohlraums (61) zugekehrt ist, wodurch keine Verbindung zwischen dem zweiten Hohlraum (61) und dem ersten Hohlraum (3) gestattet ist.

## Revendications

1. Disposition de valve (1), comprenant un boîtier (2) et un premier obturateur (15),
ledit boîtier (2) définissant une première cavité (3), ladite première cavité (3) ayant des ouvertures (4) formant au moins une arrivée et au moins une sortie,
ledit premier obturateur (15) étant disposé dans ladite première cavité (3), et utilisable pour contrôler l'écoulement d'un fluide depuis ladite au moins une arrivée jusqu'à ladite au moins une sortie, et ledit premier obturateur (15) définissant une cavité de valve (24) ayant des ouvertures formant au moins une arrivée (17) et au moins une sortie (18),
où un filtre (23) est disposé dans la cavité de valve (24) définie par ledit premier obturateur (15), ledit filtre (23) étant disposé pour couvrir au moins l'une des ouvertures (17, 18) dudit premier obturateur (15), **caractérisé en ce que** :
ledit boîtier (2) définit en outre une seconde cavité (61) disposée pour communiquer avec la première cavité (3), ladite seconde cavité (61) ayant des ouvertures dans sa paroi latérale formant au moins une arrivée et au moins une sortie, et
ladite seconde cavité (61) contenant un second obturateur (62) ayant, dans sa paroi latérale (64), au moins trois ouvertures communicantes (63), l'une formant une arrivée et l'autre formant une sortie,
où ledit second obturateur (62) est utilisable pour contrôler le passage d'un fluide depuis ladite au moins une ouverture d'arrivée jusqu'à ladite au moins une ouverture de sortie disposées dans la paroi latérale de la partie du boîtier définissant ladite seconde cavité (61).

2. Disposition de valve (1) selon la revendication 1, où
au moins une desdites ouvertures dans la première cavité(3) formant des arrivées et/ou au moins une desdites ouvertures dans la première cavité (3) formant des sorties sont disposées dans une paroi latérale (5) dudit boîtier (2); et où
au moins une desdites ouvertures dans la cavité de valve (24) formant au moins une arrivée et au moins une sortie sont disposées dans une paroi latérale (16) dudit premier obturateur (15).

3. Disposition de valve (1) selon la revendication 1 ou 2, où
au moins une desdites ouvertures formant au moins une arrivée et au moins une sortie dans ladite première cavité (3) est disposée dans une paroi inférieure dudit boîtier (2); où
au moins une (19) desdites ouvertures dans la cavité de valve (24) est disposée dans une paroi inférieure dudit premier obturateur (15).

4. Disposition de valve (1) selon l'une des précédentes revendications, où la partie du boîtier (2) définissant ladite seconde cavité (61), a une ouverture dans sa paroi inférieure, et où
ledit second obturateur (62) a une quatrième ouverture (65) dans sa paroi inférieure communicant avec lesdites au moins trois ouvertures (63) formées dans sa paroi latérale.

5. Disposition de valve (1) selon l'une des revendications précédentes, où le boîtier (2) comprend sur sa paroi extérieure des installations (6) adjacentes à chacune de ladite au moins une arrivée et chacune de ladite au moins une sortie disposées dans les première et seconde cavités (3, 61) définies dans le boîtier (2).

6. Disposition de valve (1) selon la revendication 2, où
les ouvertures dans la paroi latérale (16) dudit premier obturateur (15) sont positionnées ainsi compte tenu des ouvertures (4) disposées dans la paroi latérale de la première cavité (3) que le premier obturateur (15) est utilisable entre
une position de maintenance où aucune communication n'est permise entre les ouvertures d'arrivée (4) et les ouvertures de sortie (4) dans la paroi latérale (5) de ladite première cavité (3), via les ouvertures dans la paroi latérale du premier obturateur (15); et
une position de travail où la communication est permise entre les ouvertures d'arrivée (4) et les ouvertures de sortie (4) dans la paroi latérale (5) de ladite première cavité (3), via les ouvertures dans la paroi latérale (16) du premier obturateur (15).

7. Disposition de valve (1) selon la revendication 1 où
les ouvertures (63) dans la paroi latérale (64) dudit second obturateur (62) sont ainsi positionnées compte tenu des ouvertures disposées dans la paroi latérale de la seconde cavité (61) que le second obturateur (62) est utilisable entre
une position d'installation où aucune communication n'est permise entre les ouvertures d'arrivée et les ouvertures de sortie dans la paroi latérale de ladite seconde cavité (61), via les ouvertures (63) dans la paroi latérale (64) du second obturateur (62); et
une position de travail où la communication est permise, entre les ouvertures d'arrivée et les ouvertures de sortie dans la paroi latérale de ladite seconde cavité (61) via les ouvertures (63) dans la paroi latérale (64) du second obturateur (62).

8. Disposition de valve (1) selon la revendication 1, où ladite première cavité (3) a une ouverture d'accès (10) adaptée pour être fermée par un couvercle (30),
ledit couvercle (30) étant opérable entre
une position de travail dans laquelle l'ouverture d'accès (10) est fermée, et dans laquelle le couvercle (30) est adapté pour engrener ledit premier obturateur (15) et adapté pour installer le premier obturateur (15) pour permettre une communication entre les ouvertures d'arrivée et les ouvertures de sortie dans la paroi latérale de ladite première cavité (3), via les ouvertures (17, 18) dans la paroi latérale (16) du premier obturateur (15); et
une position de maintenance dans laquelle l'ouverture d'accès (10) est adaptée pour être ouvrable et dans laquelle le couvercle (30), lorsqu'il est déplacé de la position de travail à la position de maintenance, est adapté pour installer le premier obturateur (15) pour ne permettre aucune communication entre les ouvertures d'arrivée et les ouvertures de sortie dans la paroi latérale de ladite cavité (3), via les ouvertures (17, 18) dans la paroi latérale (16) du premier obturateur (15).

9. Disposition de valve (1) selon la revendication 8, où ledit couvercle (30) et ledit premier obturateur (15) comprennent des moyens d'engrenage complémentaires (21, 34), permettant le transfert d'un mouvement rotatif du couvercle (30) à un mouvement rotatif du premier obturateur (15).

10. Disposition de valve (1) selon l'une des précédentes revendications, où ledit filtre (23) est adapté pour coopérer avec le premier obturateur (15), selon laquelle un mouvement rotatif du premier obturateur (15) est adapté pour résulter en un mouvement rotatif correspondant du filtre (23).

11. Disposition de valve (1) selon l'une des précédentes revendications, comprenant en plus
un module d'arrivée (70) devant être connecté, ou intégré, au boîtier (2) pour communiquer avec la première cavité (3), ledit module d'arrivée (70) comprenant une valve (72) et au moins une installation (73), ladite valve (72) étant utilisable entre une position fermée et une position ouverte permettant le contrôle de la communication entre le module d'arrivée (70) et la première cavité (3); et/ou
un module de sortie (80) devant être connecté, ou intégré, au boîtier (2) pour communiquer avec la seconde cavité (61), ledit module de sortie (80) comprenant une valve (82) et au moins une installation (83), ladite valve (82) étant utilisable entre une position fermée et ouverte permettant le contrôle de la communication entre le module de sortie (80) et la seconde cavité (61).

12. Disposition de valve (1) selon l'une des revendications précédentes, comprenant en outre une bouche d'aération (35).

13. Procédé d'exploitation d'une disposition de valve (1), ladite disposition de valve (1) comprenant un boîtier (2), un premier obturateur (15), un filtre (23) et un premier appareil de fonctionnement (30),
ledit boîtier (2) définissant une première cavité (3), ladite première cavité (3) ayant dans sa paroi latérale des ouvertures formant une arrivée et une sortie et, dans une portion de mur, une ouverture d'accès (10);
ledit premier obturateur (15) définissant une première cavité de valve (24) ayant des ouvertures dans sa paroi latérale formant une arrivée (17) et une sortie (18), et ledit premier obturateur (15) étant arrangé dans ladite première cavité (3);
ledit premier appareil de fonctionnement (30) et ledit premier obturateur (15) ayant des moyens d'engrenage coopérants (21, 34), et ledit premier appareil de fonctionnement (30) étant adapté pour engrener et fermer ladite ouverture d'accès (10) d'une manière ouvrable, par laquelle tourner le premier appareil de fonctionnement (30) résulte à tourner ledit premier obturateur (15),
ledit boîtier (2) définit en plus une seconde cavité (61), ladite seconde cavité (61) ayant dans son mur de côté latéral (64) des ouvertures (63) formant une arrivée et une sortie; et
laquelle seconde cavité (61) reçoit un second obturateur (62) ayant dans son mur de côté latéral des ouvertures (64) formant au moins deux arrivées et au moins une sortie,
ledit second obturateur (62) étant opérable par un second appareil de fonctionnement (67) adapté pour engager ledit second obturateur (62) via des moyens d'engagement coopérant, selon lesquels tourner le second appareil de fonctionnement (67) résulte à tourner ledit second obturateur (62),
comprenant les étapes de fonctionnement du premier appareil de fonctionnement (30) d'une position de travail, dans laquelle le premier appareil de fonctionnement (30) ferme ladite ouverture d'accès (10), et dans laquelle les ouvertures d'arrivée et de sortie dudit premier obturateur (15) sont alignées avec les ouvertures de sortie et d'arrivée de ladite première cavité (3), permettant une communication à travers cette zone; à
une position de maintenance dans laquelle le premier appareil de fonctionnement (30) se désengage de l'ouverture d'accès (10), où les ouvertures d'arrivée et de sortie dudit premier obturateur (15) ne sont pas alignées avec les ouvertures de sortie et d'arrivée de ladite première cavité (3), empêchant toute communication à travers cette zone, et comprenant les étapes de fonctionnement du second appareil de fonctionnement (67) à partir
d'une position de travail, dans laquelle l'une des deux arrivées et la sortie (63) dans la paroi latérale (64) du second obturateur (62) sont alignées avec les ouvertures de sortie et d'entrée desdites première et seconde cavités, permettant une communication à travers cette zone; à une position d'installation dans laquelle l'une des ouvertures d'arrivée du second obturateur (62) est alignée avec l'ouverture d'arrivée de la seconde cavité (61) et l'ouverture de sortie dans la paroi latérale du second obturateur (62) fait face à une surface solide de la seconde cavité (61), ne permettant aucune communication entre la seconde cavité (61) et la première cavité (3).
